# EUROPÄISCHE PATENTSCHRIFT

(11) **EP 3 743 796 B1**
(45) Veröffentlichungstag und Bekanntmachung des Hinweises auf die Patenterteilung: **10.08.2022**
(21) Anmeldenummer: 19701489.7
(22) Anmeldetag: 21.01.2019
(51) Int. Cl.: G06F 3/0482, B63B 49/00, B63G 8/08

(54) **VORRICHTUNG UND VERFAHREN ZUM STEUERN EINES SYSTEMS MIT HILFE EINES BERÜHRUNGSSENSITIVEN BILDSCHIRMS AN BORD EINES WASSERFAHRZEUGS**
DEVICE AND METHOD FOR CONTROLLING A SYSTEM USING A TOUCH-SENSITIVE SCREEN ONBOARD A WATER VEHICLE
DISPOSITIF ET PROCÉDÉ DESTINÉS À COMMANDER UN SYSTÈME À L'AIDE D'UN ÉCRAN TACTILE À BORD D'UN VÉHICULE NAUTIQUE

(30) Priorität: 22.01.2018 DE 102018200905
(43) Veröffentlichungstag der Anmeldung: 02.12.2020
(73) Patentinhaber: thyssenkrupp Marine Systems GmbH, 24143 Kiel (DE); thyssenkrupp AG, 45143 Essen (DE)
(72) Erfinder: SCHMETZKE, Sven, 24113 Kiel (DE); SCHULZ, Lena, 23867 Sülfeldt (DE); BÖRGERT, Michael, 24107 Kiel (DE)
(74) Vertreter: thyssenkrupp Intellectual Property GmbH
(86) Internationale Anmeldenummer: PCT/EP2019/051385
(87) Internationale Veröffentlichungsnummer: WO 2019/141846

(56) Entgegenhaltungen:
- EP-A1- 2 749 837
- EP-A2- 1 921 004
- EP-A2- 2 330 030
- DE-B3-102004 004 624
- GB-A- 2 442 020
- US-A1- 2007 110 387
- US-A1- 2012 272 193
- US-A1- 2015 040 066
- US-A1- 2016 264 227

## Beschreibung

Die Erfindung betrifft eine Vorrichtung und ein Verfahren zum Steuern eines Systems mit Hilfe eines berührungssensitiven Bildschirms an Bord eines Wasserfahrzeugs, insbesondere zum Steuern eines Systems an Bord eines Unterseeboots als dem Wasserfahrzeug.

In EP 1921004 A2 wird ein Unterseeboot (U-Boot) mit einer Einrichtung beschrieben, mit der sich automatisierte Bootsfunktionen des U-Boots überwachen und steuern lassen. Mehrere nebeneinander angeordnete Bedien-Konsolen 2 nehmen jeweils eine Rechnereinheit 14 und eine Anzeige- und Bedieneinheit 18 auf. Die Rechnereinheit 14 steuert die Anzeige- und Bedieneinheit 18 an. Ein Bildschirm 26 der Anzeige- und Bedieneinheit 18 ist als ein Touch Screen ausgebildet und bildet sowohl eine Einrichtung zur Anzeige als eine Einrichtung zur Befehlseingabe.

In WO 2008035062 A2 wird ein Steuerungssystem (control system) für ein Marinefahrzeug beschrieben. Das Marinefahrzeug besitzt mehrere zu überwachende Bestandteile, unter anderem eine Maschine 12, eine Pumpe 16 und einen Generator 18. Ein HMI- Schnittstellenprozessor 148 steuert mehrere Benutzerstationen (user terminals 54, terminal 116 with interface window 180) an. Auf einem Bildschirm wird ein Hauptmenü 190 angezeigt, in dem ein Benutzer einen Bestandteil auswählen kann, und nach einer Auswahl ein Menü für einen ausgewählten Bestandteil. Auf einer Darstellung 180 werden mehrere grafische Schnittstellenelemente 188 angezeigt, beispielsweise für den Generator 18, welche Informationen über den Generator 18 anzeigen oder es ermöglichen, Aktionen am Generator 18 auszulösen.

EP 2749837 A1 zeigt eine "command and control console 1 of a weapon system" mit einem Träger (support structure 2, 3), zwei Anzeigegeräten (a first and a second display unit 4, 5) mit jeweils einem LCD-Bildschirm, zwei Eingabegeräten (a first and a second data input unit 6, 7) und einem Elektronikgerät (electronic box 8). Das Eingabegerät 6 umfasst einen Trackball 6.1 und eine Tastatur 6.2, das Eingabegerät 7 mehrere PC panels 7.1.

In Vista 500-700 Compact, Esterline Technologies Corporation, 2017, verfügbar unter https://www.esterline.com/Portals/30/Products/Codis/Docs/Vista%20Consoles/EST-VISTA500-700_C-SpecSheet-170821.pdf, abgerufen am 14. 1. 2019, wird eine Anordnung für militärische Überwasser- und Unterwasserfahrzeuge beschrieben. Diese Anordnung umfasst einen oder zwei 23-Zoll-Bildschirme (one or two 23" rugged displays with HDTV 1920x1080 resolution), einen separaten Bildschirm mit berührungssensitiven Bereichen (10.1" Touch Input), optional ein oder zwei Module mit je zwölf Tasten (Smartkey modules), eine Rechnereinheit mit Prozessor und Grafikkarten sowie ein Auswahlgerät (2"-3 buttons trackball, optional joystick).

Anzeige- und Bediengeräte für Wasserfahrzeuge werden auch in
- 9LV Marine-Kampfsystem von Saab, verfügbar unter http://www.defesaaereanaval.com.br/dan%ADvisita-a-saab-surveillance-em-iarfalla-suecia/, abgerufen am 14. 1. 2019, und in
- Open Architecture Command Control System, NCSIST, verfügbar unter http://www.ncsist.org.tw/eng/csistdup/products/product.aspx?product_Id=277&catalog=41, abgerufen am 14. 1. 2019, beschrieben.

Aufgabe der Erfindung ist es, eine Anordnung mit den Merkmalen des Oberbegriffs des Anspruchs 1 und ein Verfahren mit den Merkmalen des Oberbegriffs des Anspruchs 14 bereitzustellen, die eine sichere Auswahl einer Aktion am Bestandteil auch dann ermöglichen, wenn das Wasserfahrzeug erheblichem Seegang ausgesetzt ist.

Gelöst wird diese Aufgabe durch eine Anordnung mit den in Anspruch 1 angegebenen Merkmalen und ein Verfahren mit den in Anspruch 14 angegebenen Merkmalen. Vorteilhafte Weiterbildungen ergeben sich aus den Unteransprüchen, der nachfolgenden Beschreibung sowie den Zeichnungen.

Die lösungsgemäße Anordnung umfasst ein System mit mehreren veränderbaren Bestandteilen sowie ein Wasserfahrzeug. Jeder veränderbare Bestandteil lässt sich durch jeweils mindestens eine Aktion verändern. Eine entsprechende Ansteuerung des Bestandteils löst die oder eine Aktion am Bestandteil aus.

Das Wasserfahrzeug umfasst
- eine Anzeige- und Bedieneinheit und
- eine Rechnereinheit.

Die Anzeige- und Bedieneinheit umfasst
- einen Darstellungs-Bildschirm,
- einen weiteren Bildschirm und
- ein Auswahlgerät.

Der weitere Bildschirm ist räumlich vom Darstellungs-Bildschirm getrennt und umfasst mehrere berührungssensitive Bereiche.

Die Rechnereinheit vermag die Anzeige- und Bedieneinheit auf mindestens zwei verschiedene Weisen anzusteuern. Als Reaktion auf die erste Ansteuerung erzeugt die Anzeige- und Bedieneinheit eine Darstellung des Systems und stellt diese Darstellung auf dem Darstellungs-Bildschirm dar. Diese Darstellung zeigt mindestens einen veränderbaren Bestandteil des Systems. Als Reaktion auf die zweite Ansteuerung erzeugt die Anzeige- und Bedieneinheit auf dem weiteren Bildschirm eine Darstellung mit mindestens einer auswählbaren Aktion, die an dem oder einem veränderbaren und auf dem Darstellungs-Bildschirm dargestellten Bestandteil des Systems ausgeführt werden kann. Jede auf dem weiteren Bildschirm dargestellte Aktion ist einem berührungssensitiven Bereich des weiteren Bildschirms zugeordnet. Die Anzeige- und Bedieneinheit bewirkt, dass in jedem berührungssensitiven Bereich, dem eine auswählbare Aktion zugeordnet ist, eine Bezeichnung dieser Aktion angezeigt wird.

Das Auswahlgerät ermöglicht es einem Benutzer, einen veränderbaren Bestandteil auszuwählen, der in der Darstellung auf dem Darstellungs-Bildschirm angezeigt wird. Der Benutzer kann mit dem Auswahlgerät einen dargestellten Bestandteil auswählen.

Nach Auswahl eines dargestellten Bestandteils des dargestellten Systems vermag die Rechnereinheit die oder mindestens eine Aktion zu ermitteln, die an dem ausgewählten Bestandteil ausgeführt werden kann. Die Rechnereinheit vermag weiterhin jeweils eine ermittelte auswählbare Aktion am ausgewählten Bestandteil einem berührungssensitiven Bereich des weiteren Bildschirms zuzuordnen.

Der Benutzer kann eine solche Aktion auswählen, deren Bezeichnung in einem berührungssensitiven Bereich des weiteren Bildschirms angezeigt wird. Die Rechnereinheit vermag nach Auswahl einer Aktion die Durchführung dieser Aktion an dem zuvor ausgewählten Bestandteil auszulösen.

Das lösungsgemäße Verfahren umfasst die entsprechenden Schritte.

Lösungsgemäß wählt der Benutzer dadurch eine Aktion an de, zuvor ausgewählten Bestandteil aus, dass der Benutzer denjenigen berührungssensitiven Bereich des weiteren Bildschirms berührt, in dem eine Bezeichnung dieser Aktion angezeigt wird. Dank dieses Merkmals ist es möglich, aber nicht erforderlich, dass der Benutzer eine Tastatur oder eine DV-Maus benutzt, um die Aktion auszuwählen. Gerade dann, wenn das Wasserfahrzeug starkem Seegang ausgesetzt ist, lassen sich oft weder eine Tastatur noch eine DV-Maus mit ausreichender Sicherheit benutzen. Die Verwendung des weiteren Bildschirms mit den berührungssensitiven Bereichen reduziert somit die Gefahr einer fehlerhaften Eingabe. Ein Benutzer findet die Bezeichnung einer Aktion an derjenigen Stelle, die er anschließend berühren kann, um diese Aktion auszuwählen. Auch diese Ausgestaltung reduziert die Gefahr einer fehlerhaften Eingabe verglichen mit einer Ausgestaltung, bei der der Benutzer die Bezeichnung einer Aktion an einer Stelle liest und an einer anderen Stelle den Auslösemechanismus für diese Aktion findet, beispielsweise wenn er eine Eingabe auf einer Tastatur oder mit einer DV-Maus machen muss, die vom weiteren Bildschirm räumlich entfernt ist. Außerdem vermag der weitere Bildschirm mit den berührungssensitiven Bereichen den Umgebungsbedingungen an Bord eines Wasserfahrzeugs oft besser standzuhalten als eine Tastatur oder eine DV-Maus.

Die erfindungsgemäße Anzeige- und Bedieneinheit verteilt die Darstellung des Systems und die Darstellung der auswählbaren Aktionen auf zwei verschiedene Bildschirme, nämlich auf den Darstellungs-Bildschirm für die Darstellung des Systems und seiner auswählbaren Bestandteile und den weiteren Bildschirm mit den berührungssensitiven Bereichen für die Anzeige der Bezeichnungen der auswählbaren Aktionen. Dadurch wird die Betriebssicherheit gesteigert, was gerade bei Seegang wichtig ist: Der Darstellungs-Bildschirm wird für die Darstellung des Systems und seiner Bestandteile und in einer Ausgestaltung für die Auswahl eines dargestellten Objekts, das ein Bestandteil des Systems repräsentiert, verwendet, aber nicht für die Auswahl einer am ausgewählten Bestandteil ausführbaren Aktion. Der weitere Bildschirm wird für die Auswahl einer ausführbaren Aktion und in einer Ausgestaltung für eine weitere Spezifizierung dieser Aktion verwendet, aber nicht für die Darstellung des Systems und nicht für die Auswahl eines Bestandteils. Diese Aufteilung auf zwei Bildschirme reduziert die Gefahr einer fehlerhaften Eingabe. Außerdem steht der gesamte Darstellungs-Bildschirm für die Darstellung des Systems zur Verfügung, und kein Teil des Darstellungs-Bildschirms wird dafür benötigt, die auswählbaren Aktionen darzustellen. Insbesondere wird ermöglicht, viele Bestandteile des Systems und deren Verbindungen untereinander gleichzeitig auf dem Darstellungs-Bildschirm anzuzeigen. Dies ist gerade bei einem System mit vielen Bestandteilen von Vorteil. Umgekehrt steht der gesamte weitere Bildschirm für die Anzeige von Bezeichnungen auswählbarer Aktionen und bevorzugt von weiteren möglichen Benutzer-Eingaben zur Verfügung, was insbesondere bei vielen Aktionen von Vorteil ist.

Die Gefahr einer fehlerhaften Eingabe wird weiter reduziert, und die Ergonomie wird weiter erhöht, wenn nicht nur der weitere Bildschirm, sondern auch das Auswahlgerät von dem Darstellungs-Bildschirm räumlich getrennt ist. Ermöglicht wird, den Darstellungs-Bildschirm in einer Höhe anzubringen, in der ein Benutzer einen guten Blick auf den Darstellungs-Bildschirm und damit auf die gezeigte Darstellung des Systems hat. Der weitere Bildschirm mit den berührungssensitiven Bereichen und das Auswahlgerät lassen sich in jeweils einer Höhe anbringen, in welcher der Benutzer gut und sicher Eingaben vornehmen kann.

Lösungsgemäß ermöglicht das Auswahlgerät dem Benutzer, einen in der Darstellung gezeigten veränderbaren Bestandteil auszuwählen. Auf dem weiteren Bildschirm kann der Benutzer anschließend eine Aktion an dem zuvor ausgewählten Bestandteil auswählen. In einer Ausgestaltung wird eine Auswahl-Zeitspanne vorgegeben. Die Auswahl-Zeitspanne beginnt dann, wenn der Benutzer einen dargestellten Bestandteil ausgewählt hat, oder spätestens dann, wenn die Rechnereinheit nach Auswahl eines Bestandteils die Ermittlung der an diesem Bestandteil auswählbaren Aktionen abgeschlossen hat. Falls die Auswahl-Zeitspanne verstrichen ist, ohne dass der Benutzer eine auf dem weiteren Bildschirm bezeichnete Aktion an diesem Bestandteil ausgewählt hat, so wird auf dem weiteren Bildschirm etwas anderes gezeigt, beispielsweise eine Tastatur, mit welcher der Benutzer eine Zeichenfolge eingeben kann.

Möglich ist, eine weitere Auswahl-Zeitspanne vorzugeben. Diese weitere Auswahl-Zeitspanne beginnt, wenn auf dem Darstellungs-Bildschirm die Darstellung des Systems abgeschlossen ist und der Benutzer die Möglichkeit erhält, einen dargestellten Bestandteil auszuwählen. Falls die weitere Auswahl-Zeitspanne verstrichen ist, ohne dass der Benutzer einen auf dem Darstellungs-Bildschirm angezeigten Bestandteil ausgewählt hat, so zeigt die Anzeige- und Bedieneinheit auf dem Darstellungs-Bildschirm eine Standard-Darstellung, beispielsweise eine Darstellung des gesamten Wasserfahrzeugs mit jedem System des Wasserfahrzeugs als ein Objekt der gezeigten Standard-Darstellung.

In einer Ausgestaltung wählt ein Benutzer dadurch eine Aktion an dem zuvor ausgewählten Bestandteil aus, dass der Benutzer einmal auf dem weiteren Bildschirm einen berührungssensitiven Bereich berührt. Die Rechnereinheit löst danach die Durchführung dieser Aktion aus, ohne dass eine weitere Benutzerhandlung erforderlich ist. In einer Abwandlung wird dem Benutzer die Möglichkeit geboten, die getroffene Auswahl zu bestätigen oder zu widerrufen. Diese Sicherheitsabfrage reduziert die Gefahr, dass eine Aktion ungewollt ausgelöst wird. Möglich ist, dass die Rechnereinheit automatisch entscheidet, ob eine ausgewählte Aktion erst dann ausgelöst wird, wenn der Benutzer in einer Sicherheitsabfrage die Aktion bestätigt hat, oder ob die Aktion ohne eine solche Sicherheitsabfrage ausgelöst wird.

In einer anderen Ausgestaltung nimmt der Benutzer eine weitere Handlung vor, nachdem er einen berührungssensitiven Bereich auf dem weiteren Bildschirm und damit eine Aktion am zuvor ausgewählten Bestandteil ausgewählt hat. Beispielsweise gibt der Benutzer einen Zahlwert oder sonstigen Wert ein.

In einer Ausgestaltung erkennt die Rechnereinheit automatisch, dass die vom Benutzer ausgewählte Aktion von einem Parameter abhängt. Die Rechnereinheit steuert die Anzeige- und Bedieneinheit so an, dass die entsprechend angesteuerte Anzeige- und Bedieneinheit es dem Benutzer ermöglicht, auf dem weiteren Bildschirm einen Wert für diesen Parameter vorzugeben. Um dem Benutzer dies zu ermöglichen, zeigt in einer Ausgestaltung die Anzeige- und Bedieneinheit in mehreren berührungssensitiven Bereichen jeweils mindestens eine Ziffer und bevorzugt in mindestens einem weiteren berührungssensitiven Bereich ein weiteres Zeichen, beispielsweise ein Komma oder einen Punkt oder ein Vorzeichen, sowie bevorzugt in einem weiteren berührungssensitiven Bereich eine Bezeichnung der Handlung "Eingabe beenden" an. Auf diese Weise zeigt die Anzeige- und Bedieneinheit eine Tastatur auf dem weiteren Bildschirm oder auch auf dem Darstellungs-Bildschirm an. Der Benutzer gibt den Zahlwert und / oder einen sonstigen Wert ein, indem er nacheinander jeweils einen berührungssensitiven Bereich pro Ziffer oder sonstigem Zeichen berührt, und bevorzugt anschließend den berührungssensitiven Bereich für die Handlung "Eingabe beenden" berührt. Die Anzeige- und Bedieneinheit erfasst die Benutzereingabe und ermittelt aus der eingegebenen Abfolge von Ziffern und bevorzugt weiteren Zeichen den Zahlwert oder sonstigen Wert. Die Rechnereinheit verwendet den dergestalt eingegebenen und ermittelten Wert als einen Parameter-Wert der durchzuführenden Aktion am ausgewählten Bestandteil. Diese Ausgestaltung ermöglicht es dem Benutzer, einen Parameter-Wert für einen Bestandteil des Systems einzugeben, ohne hierfür eine physikalische Tastatur verwenden zu müssen. Vorzugsweise prüft die Rechnereinheit, ob die eingegebene Abfolge von Zeichen einen zulässigen Wert für den Parameter bezeichnet oder nicht.

In einer Ausgestaltung wird dem Benutzer auf dem weiteren Bildschirm angezeigt, welchen Wert die Anzeige- und Bedieneinheit aufgrund der Benutzereingabe ermittelt hat. Der Benutzer kann diesen Wert bestätigen, wodurch die Aktion mit diesem Wert tatsächlich ausgelöst wird, einen anderen Wert eingeben oder die tatsächliche Auslösung der Aktion verhindern ("abbrechen"). Möglich ist, dass der Benutzer nacheinander oder gleichzeitig mehrere Werte eingibt, insbesondere für verschiedene Parameter, die zusammen die zuvor ausgewählte Aktion spezifizieren.

Andere Ausgestaltungen, wie der Benutzer auf dem weiteren Bildschirm einen Wert für den oder jeden Parameter der Aktion eingeben kann, sind ebenfalls möglich, beispielsweise ein Schieberegler, den ein Benutzer durch Berührung des Bildschirms auf einen gewünschten Wert einstellen kann.

Gemäß dieser Ausgestaltung mit der Parameter-Eingabe wird der weitere Bildschirm zunächst dafür verwendet, dass der Benutzer eine Aktion an dem zuvor ausgewählten Bestandteil auswählen kann, und anschließend dafür, einen Parameter-Wert für die ausgewählte Aktion einzugeben. Möglich ist, dass der weitere Bildschirm auch dann dieselbe oder eine andere Tastatur anzeigt und die Eingabe einer Zeichenfolge ermöglicht, wenn noch kein Bestandteil auf den Darstellungs-Bildschirm ausgewählt wurde. In dieser Ausgestaltung lässt sich der Bildschirm also nicht nur für die weitere Spezifikation einer ausgewählten Aktion, sondern zusätzlich für einen weiteren Zweck verwenden. Indem der Benutzer die Tastatur auf dem weiteren Bildschirm verwendet, kann der Benutzer beispielsweise festlegen, welches System auf dem Darstellungs-Bildschirm dargestellt wird, oder einen Bestandteil des dargestellten Systems auswählen, oder einen Steuerbefehl eingeben. Auch in dieser Ausführungsform steht der gesamte Darstellungs-Bildschirm für die Darstellung des Systems zur Verfügung.

Lösungsgemäß wählt der Benutzer mit dem Auswahlgerät einen Bestandteil des Systems aus, wobei dieser Bestandteil in der Darstellung des Systems gezeigt wird, die auf dem Darstellungs-Bildschirm gezeigt wird. In einer Ausführungsform ist dieses Auswahlgerät in den Darstellungs-Bildschirm selber integriert. Nicht nur der weitere Bildschirm, sondern auch der Darstellungs-Bildschirm umfasst mehrere berührungssensitive Bereiche. Der Benutzer wählt dadurch einen Bestandteil aus, dass er den Darstellungs-Bildschirm an einer Stelle berührt, in welcher der Bestandteil gezeigt wird.

In einer anderen Ausführungsform ist das Auswahlgerät räumlich vom Darstellungs-Bildschirm getrennt. Wie bereits dargelegt, ist es möglich, dass das Auswahlgerät in den weiteren Bildschirm integriert ist. In einer anderen Ausgestaltung umfasst das Auswahlgerät einen Track Ball und mindestens eine Taste. Mit Hilfe des Track Balls schiebt der Benutzer ein bewegliches Darstellungselement (Cursor) auf dem Darstellungs-Bildschirm in eine gewünschte Position. Mit Hilfe der oder einer Taste des Auswahlgeräts wählt der Benutzer dann einen dargestellten Bestandteil aus.

Lösungsgemäß ermittelt die Rechnereinheit nach Auswahl eines Bestandteils, welche Aktionen an diesem ausgewählten Bestandteil durchführbar sind. In einer Ausgestaltung greift die Rechnereinheit hierbei lesend auf eine rechnerverfügbare Auflistung der durchführbaren Aktionen zu. In einer Ausführungsform lassen sich in jeder Situationen alle Aktionen, die für einen Bestandteil möglich sind, tatsächlich auswählen.

In einer anderen Ausführungsform berücksichtigt die Rechnereinheit bei der Ermittlung der auswählbaren Aktionen zusätzlich mindestens eine Betriebsbedingung und / oder mindestens eine Umgebungsbedingung des Wasserfahrzeugs und / oder des Systems mit dem ausgewählten Bestandteil. Welche Aktionen am zuvor ausgewählten Bestandteil der Benutzer tatsächlich auswählen kann, hängt von dieser Bedingung ab. Die Betriebsbedingung umfasst beispielsweise die Fahrtgeschwindigkeit oder den Kurs des Wasserfahrzeugs, eine Drehzahl eines rotierenden Bestandteils oder eine Stellung eines Ventils. Die Umgebungsbedingung umfasst beispielsweise die Windstärke, Wellenbewegungen, Wasserströmungen oder die Position eines anderen Wasserfahrzeugs oder Luftfahrzeugs oder einer Küste relativ zu dem zu überwachenden Wasserfahrzeug und / oder System.

Indem die Rechnereinheit die Bedingung berücksichtigt, wird verhindert, dass der Benutzer eine Aktion auswählt, die zu einer unerwünschten Situation oder sogar zu einer Gefahr für das Wasserfahrzeug und seine Besatzung oder zu einer Beschädigung des Systems führen kann. Diese Ausgestaltung stellt weiterhin sicher, dass einem Benutzer nur diejenigen Aktionen angeboten werden, die sich aktuell tatsächlich gefahrlos ausführen lassen und die der Benutzer damit tatsächlich aktuell auswählen kann. Verhindert wird in vielen Situationen, dass dem Benutzer eine Aktion zur Auswahl angeboten wird, der Benutzer diese Auswahl auswählt und ihm anschließend gemeldet wird, dass diese Aktion nicht ausführbar ist.

Lösungsgemäß zeigt jeder berührungssensitive Bereich, dem eine ermittelte und damit auswählbare Aktion zugeordnet ist, eine Bezeichnung dieser zugeordneten Aktion. In einer Ausgestaltung ist diese Bezeichnung eine Beschriftung, die aus Buchstaben und / oder Ziffern besteht. Die Bezeichnung kann auch Symbole, Piktogramme und / oder Farben umfassen.

Eine Aktion, die an einem Bestandteil ausgeführt wird, kann insbesondere den Schritt umfassen, dass der Bestandteil seine Position relativ zu dem Wasser, welches das Wasserfahrzeug oder das System umgibt, verändert oder die Geschwindigkeit der Positions-Veränderung abgewandelt wird. Der Bestandteil kann durch die Aktion einen anderen Bestandteil bewegen. Der Bestandteil kann insbesondere ein ansteuerbares Stellglied oder ein ansteuerbarer Motor sein. Die Aktion kann auch daraus bestehen, dass ein Parameter des Bestandteils auf einen vorgegebenen Wert eingestellt oder eingeregelt wird. Der Bestandteil kann auch einen Sensor umfassen, und die Aktion besteht daraus, einen Messvorgang durch den Sensor auszulösen oder zu beenden oder anderweitig zu beeinflussen und / oder einen vom Sensor zuvor gemessenen Wert abzufragen. Der Sensor kann eine Kamera und / oder eine Bildverarbeitungseinheit oder ein Hydrophon umfassen oder z.B. die Geoposition oder Tauchtiefe des Wasserfahrzeugs, die Meerestiefe unter dem Wasserfahrzeug oder die Temperatur oder den Salzgehalt oder die Strömungsgeschwindigkeit oder Strömungsrichtung des umgebenden Wassers oder eine Windgeschwindigkeit oder eine Wellenbewegung messen oder andere Wasserfahrzeuge oder sonstige Objekte im oder auf dem Wasser peilen und / oder orten.

Der Bestandteil kann einen Sender umfassen, beispielsweise eine Überwasser- oder Unterwasser-Antenne, und die Aktion besteht daraus, den Sender zum Aussenden eines Signals zu veranlassen. Der Bestandteil kann auch eine Meldeeinheit, z.B. eine Meldeleuchte oder eine Sirene, umfassen, und die Aktion besteht daraus, diese Meldeeinheit einzuschalten oder auszuschalten. Der Bestandteil kann auch einen Datenspeicher umfassen, und die Aktion besteht daraus, den Inhalt dieses Datenspeichers auszulesen oder eine im Datenspeicher abgespeicherte Information abzufragen oder eine Information im Datenspeicher abzuspeichern.

Ein veränderbarer Bestandteil des Systems kann zur Rechnereinheit selber gehören oder räumlich und / oder funktionell von der Rechnereinheit getrennt sein. Die Rechnereinheit kann direkt den ausgewählten Bestandteil ansteuern und dadurch die ausgewählte Aktion auslösen. Möglich ist auch, dass die Rechnereinheit über eine drahtgebundene oder drahtlose Datenverbindung eine Nachricht an ein Steuergerät übermittelt, wobei das Steuergerät Aktionen an Bestandteilen des Systems auszulösen vermag und die Nachricht eine rechnerauswertbare Bezeichnung (z.B. eine eindeutige Kennung) des ausgewählten Bestandteils und eine rechnerauswertbare Bezeichnung der ausgewählten Aktion umfasst. Nach Erhalt dieser Nachricht löst das Steuergerät automatisch die spezifizierte Aktion an dem spezifizierten Bestandteil aus. Diese Ausgestaltung verteilt die Prozesse, die bei der Auswahl und Ausführung einer Aktion durchzuführen sind, auf zwei verschiedene Geräte auf, nämlich auf die Rechnereinheit (für die Erzeugung der Darstellung und die Auswahl des Bestandteils und der Aktion) und auf das Steuergerät (für die Ausführung der Aktion). Möglich ist, dass das Steuergerät die ausführbaren Aktionen ermittelt.

Das oder ein Auswahlgerät kann eine DV-Maus, eine Tastatur oder einen Track Ball umfassen. Möglich ist, dass auch der Darstellungs-Bildschirm mehrere berührungssensitive Bereiche umfasst und als das oder ein Auswahlgerät fungiert. Das Auswahlgerät kann auch in den weiteren Bildschirm integriert sein. In einer Ausgestaltung sind mehrere unterschiedlich ausgestaltete Auswahlgeräte vorhanden, und der Benutzer kann wahlweise das eine oder das andere Auswahlgerät benutzen.

Die Darstellung des Systems, die auf dem Darstellungs-Bildschirm dargestellt wird, kann eine fotografische Abbildung des Systems sein. Bevorzugt ist die Darstellung aber eine vereinfachte Repräsentation des Systems, welche die oder einige auswählbare Bestandteile des Systems und die Verbindungen unter diesen Bestandteilen darstellt. Ein Bestandteil wird beispielsweise durch ein Piktogramm (icon) und / oder eine textliche Bezeichnung dargestellt. Diese vereinfachte Repräsentation lässt sich schneller erzeugen und benötigt weniger Speicherplatz als eine fotografische Abbildung.

Die Erfindung lässt sich relativ leicht ein Bord eines bereits fertig gestellten Wasserfahrzeugs implementieren. In der Regel sind die Rechnereinheit, der Darstellungs-Bildschirm und das Auswahlgerät bereits vorhanden. Die bestehende Rechnereinheit ist in der Regel bereits dazu ausgestaltet, die Darstellung des Systems zu veranlassen. Es reicht aus, den weiteren Bildschirm mit den berührungssensitiven Bereichen zu ergänzen, beispielsweise indem eine vorhandene Tastatur oder eine vorhandene DV-Maus durch den weiteren Bildschirm ersetzt wird. Weiterhin ist die Software auf der Rechnereinheit und der Anzeige- und Bedieneinheit entsprechend abzuändern.

In einer Ausgestaltung ist das System mit den auswählbaren Bestandteilen an Bord des Wasserfahrzeugs montiert, welches auch die Anzeige- und Bedieneinheit und die Rechnereinheit aufweist. In einer anderen Ausgestaltung ist das System an Bord eines weiteren Wasserfahrzeugs montiert, welches dauerhaft oder wenigstens zeitweise vom Wasserfahrzeug mit der Anzeige- und Bedieneinheit und der Rechnereinheit räumlich getrennt ist. Das weitere Wasserfahrzeug kann ein bemanntes oder ein unbemanntes Fahrzeug sein und als Überwasserfahrzeug oder Unterwasserfahrzeug ausgestaltet sein und einen eigenen Antrieb aufweisen oder antriebslos sein. Bevorzugt umfasst das weitere Wasserfahrzeug ein Steuergerät, welches über eine drahtgebundene oder drahtlose Datenverbindung mit der Rechnereinheit an Bord des Wasserfahrzeugs mit der Anzeige- und Bedieneinheit und der Rechnereinheit verbunden ist. Möglich ist auch, dass das System auf das Wasserfahrzeug und das weitere Wasserfahrzeug verteilt ist und mindestens ein dargestellter Bestandteil an Bord des Wasserfahrzeugs und mindestens ein weiterer dargestellter Bestandteil an Bord des weiteren Wasserfahrzeugs montiert ist. In einer dritten Ausgestaltung ist das System an Bord einer Basisstation montiert, die räumlich entfernt vom Wasserfahrzeug ist und beispielsweise an Land aufgebaut ist oder zu einer schwimmenden Plattform oder zu einem Luftfahrzeug gehört.

Das Wasserfahrzeug mit der Anzeige- und Bedieneinheit und der Rechnereinheit kann ein Überwasserfahrzeug oder ein Unterwasserfahrzeug sein. Es kann einen eigenen Antrieb aufweisen oder dazu ausgestaltet sein, durch das Wasser gezogen oder geschoben zu werden oder im Wasser aufzusteigen oder abzusinken. Das Wasserfahrzeug und / oder ein weiteres Wasserfahrzeug mit dem System ist beispielsweise für den Transport von Personen und / oder Gütern, zur Suche nach Objekten auf einem Gewässergrund oder im Wasser, zur Überwachung, für Forschungszwecke oder für militärische Zwecke ausgestaltet.

Nachfolgend werden die erfindungsgemäße Anordnung und das erfindungsgemäße Verfahren anhand eines in den Zeichnungen dargestellten Ausführungsbeispiels näher erläutert. Dabei zeigen
Fig. 1 in perspektivischer Ansicht eine Bedien-Konsole nach dem Stand der Technik ohne eingeschobene Bestandteile;
Fig. 2 drei nebeneinander angeordnete Bedien-Konsolen gemäß Fig. 1 mit eingeschobenen Bestandteilen;
Fig. 3 drei nebeneinander angeordnete lösungsgemäße Bedien-Konsolen;
Fig. 4 den Bildschirm von Fig. 3 mit der Darstellung eines Systems des U-Boots;
Fig. 5 den berührungssensitiven Bildschirm von Fig. 3, wobei auf den berührungssensitiven Bereichen die möglichen Aktionen für das ausgewählte Objekt dargestellt sind.

Im Ausführungsbeispiel wird eine Anzeige- und Bedieneinheit mit mindestens einer Bedien-Konsole 2 dafür verwendet, dass ein Benutzer mindestens ein System überwachen kann und Aktionen an Bestandteilen dieses Systems auslösen kann, also das System steuern kann. Sowohl das System als auch die oder jede Bedien-Konsole 2 sind an Bord eines bemannten Wasserfahrzeugs montiert. Im Ausführungsbeispiel ist dieses Wasserfahrzeug ein bemanntes Unterseeboot (U-Boot) mit einem Druckkörper. Die oder jede Bedien-Konsole 2 ist im Inneren des Druckkörpers angeordnet. In einer Ausführungsform ist jede Bedien-Konsole 2 einem anderen System des U-Boots zugeordnet. In einer anderen Ausführungsform wählt der Benutzer aus, welches System des U-Boots er mit einer bestimmten Bedien-Konsole 2 aktuell überwachen und steuern möchte.

Beispiele für Systeme des U-Boots, die mit Hilfe der oder einer Bedien-Konsole 2 überwacht und gesteuert werden, sind:
- das Kühlungssystem für die Batterien,
- die Klimaanlage,
- das elektrische Netz zur Versorgung elektrischer Verbraucher,
- die Sensoren der Sonar-Anlage und weitere Sensoren, die über einen Datenbus mit einer Signalverarbeitungseinheit verbunden sind,
- der Hydraulikkreislauf für die Ruderanlage,
- der Elektromotor,
- die Generatoren,
- die Brennstoffzellen.

Möglich ist auch, mit einer Bedien-Konsole 2 an Bord des U-Boots ein System zu überwachen und zu steuern, welches sich dauerhaft oder wenigstens zeitweise außerhalb des U-Boots befindet. Das System gehört beispielsweise zu einem ferngesteuerten unbemannten Unterwasserfahrzeug oder zu einer Boje. Das U-Boot mit der Bedien-Konsole 2 transportiert das unbemannte Unterwasserfahrzeug oder die Boje zu einem Einsatzgebiet und setzt es bzw. sie dort ab. Anschließend wird ein System an Bord des abgesetzten unbemannten Unterwasserfahrzeugs oder der Boje vom U-Boot aus überwacht und gesteuert.

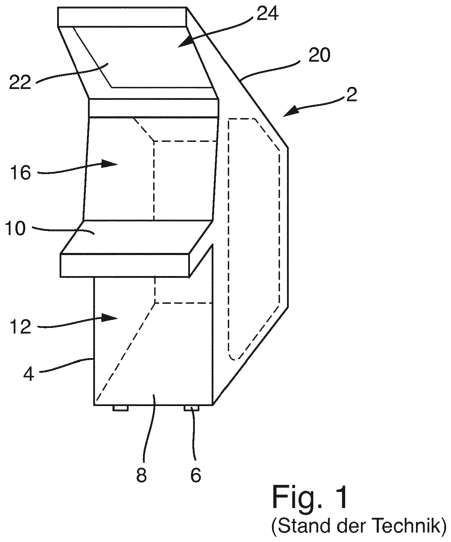

In Fig. 1 wird in perspektivischer Ansicht eine Bedien-Konsole nach dem Stand der Technik und ohne eingeschobene Bestandteile gezeigt, wie sie beispielsweise aus EP 1921004 A2 bekannt ist. Die Bedien-Konsole 2 befindet sich im Inneren des Druckkörpers des U-Boots und steht auf mehreren Standfüßen 6, die vorzugsweise federnd gelagert sind und die an einer Bodenplatte 8 der Bedien-Konsole 2 montiert sind. Die Vorderseite 4 der Bedien-Konsole 2 ist dem Benutzer zugewandt, die Rückseite zeigt zum Druckkörper des U-Boots und ist im Normalbetrieb nicht zugänglich. Die Bedien-Konsole 2 umfasst ein Verkleidungsblech 22 und besitzt drei Einschübe:
- einen unteren Einschub 12,
- einen mittleren Einschub 16 und
- einen flachen und schrägen oberen Einschub 24.

Zwischen den mittleren Einschub 16 und dem oberen Einschub 14 ist an der Vorderseite 4 ein zum Benutzer hin vorspringendes Bord 10 angeordnet. Das Verkleidungsblech 22 ist oberhalb dieses Bords 10 über die Vorderseite 4 hin zum Benutzer vorgezogen und bildet einen Blendschutz.

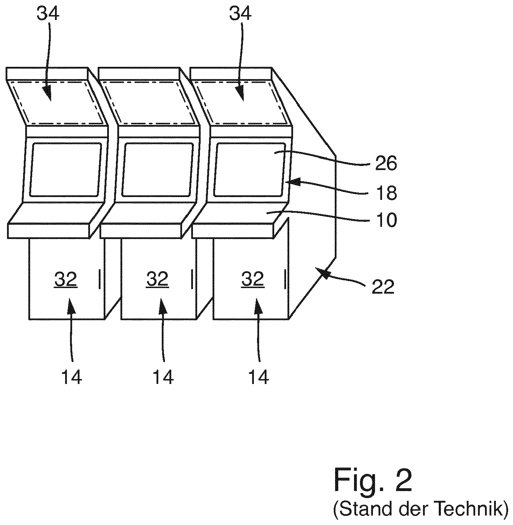

Fig. 2 zeigt drei nebeneinander angeordnete Bedien-Konsolen gemäß Fig. 1 mit jeweils mehreren eingebauten Bestandteilen. Jede in Fig. 2 gezeigte Bedien-Konsole kann so wie in EP 1921004 A2 beschrieben aufgebaut sein. In den unteren Einschub 12 ist eine Rechnereinheit 14 eingebaut. Eine Tür 32 vermag den Raum zu verschließen, den der untere Einschub 12 bereitstellt, und dadurch die Rechnereinheit 14 vor Umgebungseinflüssen zu schützen. In den mittleren Einschub 16 ist eine Anzeige- und Bedieneinheit 18 eingebaut. Diese Anzeige- und Bedieneinheit 18 umfasst einen Bildschirm 26. Dieser Bildschirm 26 wird auch als Darstellungs-Bildschirm bezeichnet und vermag gleichzeitig mehrere Bestandteile eines Systems sowie Verbindungen unter diesen Bestandteilen darzustellen. Der Darstellungs-Bildschirm 26 kann berührungssensitiv sein. Der Benutzer kann sich an dem Bord 10 abstützen oder einen Gegenstand auf das Bord 10 legen. In den schrägen oberen Einschub 24 ist eine Instrumententafel 34 mit verschiedenen Meldeleuchten eingeschoben. Diese Meldeleuchten zeigen bestimmte Betriebszustände von Bestandteilen des U-Boots.

Die Anzeige- und Bedieneinheit 18 vermag Eingaben eines Benutzers zu verarbeiten. In einer Ausgestaltung umfasst der Darstellungs-Bildschirm 26 mehrere berührungssensitive Bereiche, und die Anzeige- und Bedieneinheit 18 verarbeitet Benutzer-Eingaben, die daraus bestehen, dass der Benutzer jeweils einen berührungssensitiven Bereich des Darstellungs-Bildschirms 26 berührt. In einer anderen Ausgestaltung nimmt der Benutzer Eingaben mit Hilfe eines Auswahlgeräts 28 vor, welches räumlich vom Darstellungs-Bildschirm 26 getrennt ist und weiter unten beschrieben wird.

Die Anzeige- und Bedieneinheit 18 steht in Datenverbindung mit der Rechnereinheit 14. Die Anzeige- und Bedieneinheit 18 übermittelt an die Rechnereinheit 14 die erfassten Benutzereingaben. Die Rechnereinheit 14 veranlasst die Anzeige- und Bedieneinheit 18, auf dem Darstellungs-Bildschirm 26 oder auf einem weiteren Bildschirm 36, der weiter unten beschrieben wird und nicht aus dem in Fig. 1 und Fig. 2 gezeigten Stand der Technik bekannt ist, bestimmte von der Rechnereinheit 14 generierte Darstellungen anzuzeigen. Weiterhin vermag die Rechnereinheit 14 die Instrumententafel 34 anzusteuern und dabei die Instrumententafel 34 zu veranlassen, eine Meldeleuchte einzuschalten oder auszuschalten.

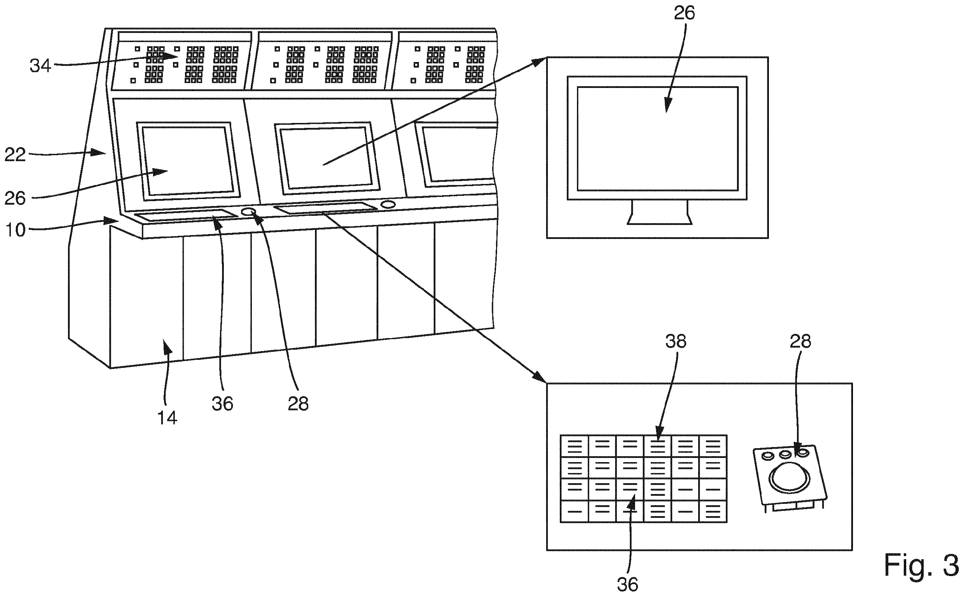

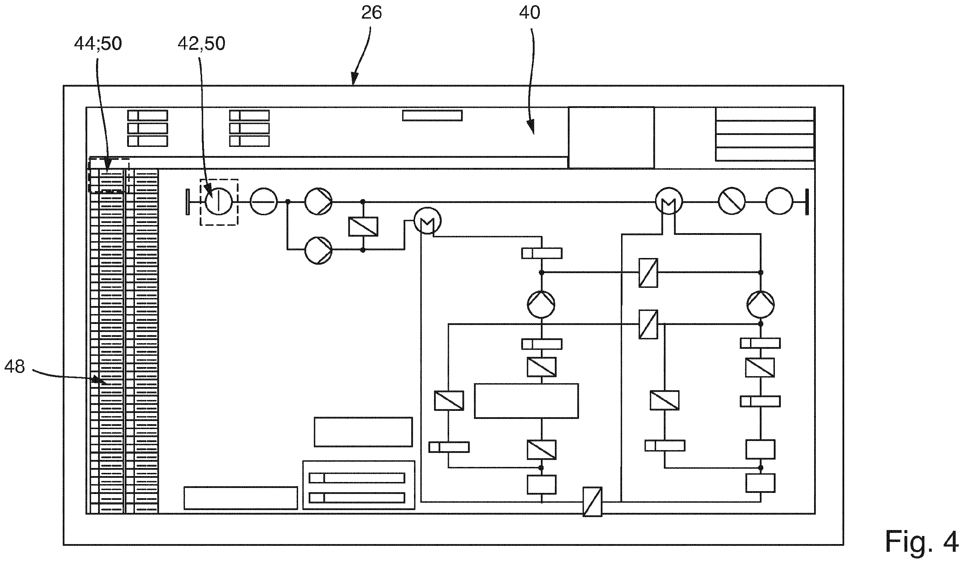

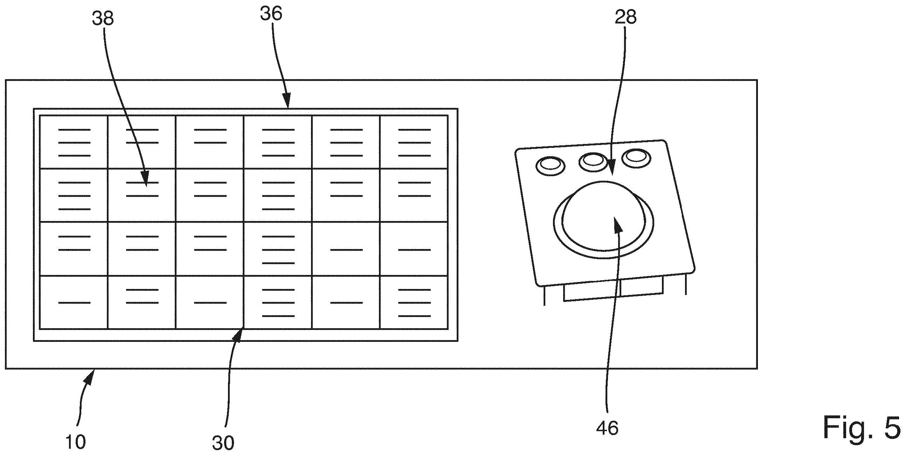

In Fig. 3 wird ein Ausführungsbeispiel für die lösungsgemäße Abwandlung der Bedien-Konsole 2 von Fig. 1 und Fig. 2 gezeigt. Gleiche Bestandteile haben dieselben Bezugszeichen wie in Fig. 1 und Fig. 2. Die Bedien-Konsole 2 von Fig. 3 hat vorzugsweise auch die in Fig. 1 und Fig. 2 gezeigten Bestandteile, soweit im Folgenden nichts anderes erwähnt ist. Die Detailansicht von Fig. 4 zeigt den Darstellungs-Bildschirm 26, auf dem ein System des U-Boots durch eine Darstellung 40 dargestellt wird. Die Detailansicht von Fig. 5 zeigt das Bord 10 mit zwei auf dem Bord 10 montierten Bestandteilen, nämlich dem weiteren Bildschirm 36 und einem Auswahlgerät 28.

Auf dem Darstellungs-Bildschirm 26 werden die Bestandteile eines Systems des U-Boots dargestellt. Zu Beginn werden im Ausführungsbeispiel das gesamte U-Boot und seine Teilsysteme dargestellt. Der Benutzer wählt ein Teilsystem aus. Anschließend fungiert dieses ausgewählte Teilsystem als das darzustellende System. In Fig. 4 wird ein Teilsystem des U-Boots, nämlich das Kühlungssystem für die Batteriezellen des U-Boots, durch die Darstellung 40 dargestellt. Die Rechnereinheit 14 veranlasst die Anzeige- und Bedieneinheit 18, diese Darstellung 40 auf dem Bildschirm 26 anzuzeigen. Die Darstellung 40 zeigt das Kühlungssystem einerseits graphisch, wobei die Bestandteile des Systems durch graphische Symbole gezeigt werden, die miteinander verbunden sind. Andererseits zeigt die Darstellung 40 links eine Auflistung 48 der gezeigten Bestandteile des Systems. Im Beispiel von Fig. 4 hat der Benutzer das graphische Objekt 42 in der Darstellung 40 ausgewählt, wobei das Objekt 42 ein Ventil 50 des Kühlungssystems repräsentiert. Das ausgewählte Objekt 42 wird in der Darstellung 40 hervorgehoben dargestellt. In der Auflistung wird die Bezeichnung 44 des ausgewählten Objekts 42 und damit die des ausgewählten Bestandteils 50 ebenfalls hervorgehoben gekennzeichnet.

Im Ausführungsbeispiel sind auf dem Bord 10 ein berührungssensitiver Bildschirm 36 und ein Auswahlgerät 28 montiert. Das Bord 10 ist so hoch angeordnet, dass ein Benutzer bequem den Bildschirm 36 und das Auswahlgerät 28 erreichen und von schräg oben berühren kann. Der berührungssensitive Bildschirm 36 befindet sich mit einem Abstand unterhalb des Darstellungs-Bildschirms 26 und umfasst mehrere berührungssensitive Bereiche 38, wobei bevorzugt jeder Bereich 38 die Form eines Rechtecks hat und die Bereiche 38 bevorzugt nebeneinander und untereinander und nicht überlappend in Zeilen und Spalten auf dem Bildschirm 36 angeordnet sind. Möglich ist, dass der Bildschirm 36 auf dem Bord 10 zusätzlich einen nicht berührungssensitiven Bereich aufweist, z.B. um Meldungen an den Benutzer auszugeben. Ein Benutzer kann einen berührungssensitiven Bereich 38 auswählen, beispielsweise indem der Benutzer den Bereich 38 berührt. Das Auswahlgerät 28 auf dem Bord 10 besitzt im Ausführungsbeispiel einen Track Ball 46 sowie drei runde Tasten und ist fest in das Bord 10 eingebaut. Dieses Auswahlgerät 28 funktioniert wie eine DV-Maus mit drei Tasten. Gerade bei Seegang lässt sich das Auswahlgerät 28 mit dem Track Ball 46 besser benutzen als eine DV-Maus, insbesondere weil es nicht erforderlich ist, dass ein Benutzer das Auswahlgerät 28 relativ zum Bord 10 verschiebt, um eine Auswahl zu treffen. Anstelle eines Track Balls 46 lässt sich auch ein sogenannter "Wisch-Bildschirm" verwenden, wie er von Smartphones her bekannt ist.

Der Benutzer hat in der Darstellung 40 das dargestellte Objekt 42 ausgewählt, welches ein Ventil 50 des Kühlungssystems repräsentiert. Für diese Auswahl hat der Benutzer das Auswahlgerät 28 verwendet. Mit dem Track Ball 46 hat der Benutzer ein bewegliches Element, z.B. einen Cursor, in der Darstellung 40 hin und her bewegt, bis das bewegliche Element das Objekt 42 erreicht hat. Dann hat der Benutzer eine Taste des Auswahlgeräts 28 betätigt und dadurch das Objekt 42 ausgewählt. In einer Ausgestaltung ist auch der Darstellungs-Bildschirm 26, auf dem die Darstellung 40 angezeigt wird, berührungssensitiv. Ein Benutzer kann ein Objekt 42 daher auch dadurch auswählen, dass er dieses Objekt 42 auf dem Bildschirm 26 berührt.

Die Anzeige- und Bedieneinheit 18 erfasst diese Benutzereingabe, also die Auswahl eines dargestellten Objekts 42 mit Hilfe des Auswahlgeräts 28 und / oder durch Berührung des Darstellungs-Bildschirms 26, und übermittelt an die Rechnereinheit 14, dass und welchen Bestandteil der Benutzer ausgewählt hat. In einer Ausgestaltung gibt die Anzeige- und Bedieneinheit 18 ein Bestätigungssignal aus, nachdem der Benutzer ein Objekt 42 ausgewählt hat. Das Bestätigungssignal kann z.B. das Aufleuchten einer Meldeleuchte an der Instrumententafel 34 oder ein sonstiges visuell oder akustisch oder taktil erfassbares Signal sein, z.B. eine Hervorhebung des ausgewählten Bestandteils in der Darstellung oder eine Vibration. Das Bestätigungssignal zeigt dem Benutzer, dass seine Auswahl erfasst worden ist.

Als Reaktion auf die Auswahl des Objekts 42 und damit des Bestandteils 50 ermittelt die Rechnereinheit 14, welche Aktionen an demjenigen Bestandteil 50 (hier: Ventil) des dargestellten Systems (hier: Kühlungssystem), das durch das ausgewählte Objekt 42 repräsentiert wird, durchgeführt werden können. Beispielsweise greift die Rechnereinheit 14 lesend auf eine rechnerverfügbare Tabelle zu, in welcher die möglichen Aktionen für diesen ausgewählten Bestandteil 50 abgespeichert sind. Anschließend veranlasst die Rechnereinheit 14 die Anzeige- und Bedieneinheit 18 dazu, eine Aktionen-Darstellung 30 zu generieren und auf dem berührungssensitiven Bildschirm 36 anzuzeigen. Diese Aktionen-Darstellung 30 zeigt die ermittelten Aktionen, die an demjenigen Bestandteil 50 durchführbar sind, den das ausgewählte Objekt 42 in der Darstellung 40 repräsentiert. Die Aktionen-Darstellung 30 der möglichen Aktionen ist also kontextabhängig, denn die Aktionen-Darstellung 30 hängt davon ab, welches Objekt 42 der Darstellung 40 und damit welcher Bestandteil 50 zuvor ausgewählt wurde.

In einer Ausführungsform hängen die Ermittlung der ausführbaren Aktionen und damit die Darstellung 30 zusätzlich von ermittelten aktuellen oder erwarteten Betriebsbedingungen und / oder Umgebungsbedingungen des U-Boots ab. Beispiele für Betriebsbedingungen sind die aktuelle Fahrtgeschwindigkeit, Tauchtiefe, der aktuelle Abstand zum Meeresgrund, ein Ladezustand von Batterien oder Temperaturen an Bord des U-Boots. Beispiele für Umgebungsbedingungen sind Wasserströmungen, Wellenbewegungen, die Wassertemperatur, der Saltzgehalt oder Positionen und Kurse von anderen Wasserfahrzeugen relativ zum U-Boot.

Bei bestimmten Betriebsbedingungen oder Umgebungsbedingungen sind manche Aktionen für den ausgewählten Bestandteil 50 nicht zulässig und werden daher überhaupt nicht ermittelt und angezeigt oder werden zwar angezeigt, lassen sich aber nicht auswählen und werden bevorzugt anders angezeigt als die auswählbaren Aktionen. Diese Ausgestaltung vermeidet die unerwünschte Wirkung, dass einem Benutzer eine Aktion zur Auswahl angeboten wird, der Benutzer diese Aktion auswählt und ihm dann mitgeteilt wird, dass diese Aktion jetzt aber nicht durchführbar ist. Diese unerwünschte Wirkung kostet unnütze Zeit.

Bevor der Benutzer ein Objekt 42 und damit einen Bestandteil 50 ausgewählt hat, wird auf dem weiteren Bildschirm 36 eine Standard-Darstellung gezeigt. Beispielsweise wird auf dem weiteren Bildschirm 36 eine Tastatur dargestellt, wobei jedem berührungssensitiven Bereich 38 jeweils mindestens ein Zeichen zugeordnet ist. Möglich ist, dass demselben berührungssensitiven Bereich 38 mehrere Zeichen sowie eine Reihenfolge unter diesen Zeichen zugeordnet sind, so wie dies von Mobiltelefonen her bekannt ist.

Nachdem der Benutzer einen Bestandteil 50 ausgewählt hat, ordnet die Rechnereinheit 14 jedem berührungssensitiven Bereich 38 des Bildschirms 36 jeweils eine auswählbare Aktion an diesem Bestandteil 50 zu. Die Rechnereinheit 14 steuert die Anzeige- und Bedieneinheit 18 so an, dass folgende Schritte durchgeführt wird: Für jede mögliche Aktion, die in der Aktionen-Darstellung 30 gezeigt wird und die aktuell auswählbar ist, wird eine Bezeichnung dieser Aktion in einem berührungssensitiven Bereich 38 des Bildschirms 36 auf dem Bord 10 gezeigt. Möglich ist natürlich, dass einigen berührungssensitiven Bereichen 38 keine Aktion zugeordnet wird, weil es mehr Bereiche 38 als auswählbare Aktionen gibt, oder dass es mehr auswählbare Aktionen als berührungssensitive Bereiche 38 gibt, worauf wie unten beschrieben reagiert wird.

Im Ausführungsbeispiel wird eine Auswahl-Zeitspanne vorgegeben. Diese Auswahl-Zeitspanne beginnt, nachdem der Benutzer das dargestellte Objekt 42 und damit einen Bestandteil 50 in der Darstellung 40 ausgewählt hat, oder spätestens, wenn die Anzeige- und Bedieneinheit 18 die Aktionen-Darstellung 30 erzeugt und angezeigt hat. Bis zum Ablauf der Auswahl-Zeitspanne hat der Benutzer Gelegenheit, einen Bereich 38 auszuwählen, auf dem die Bezeichnung einer Aktion zu sehen ist, die am ausgewählten Bestandteil 50 durchgeführt werden kann, oder eine sonstige Aktion. Bevorzugt wählt der Benutzer eine Aktion aus, indem der Benutzer einen Bereich 38 auf dem weiteren Bildschirm 36 berührt, dem eine Aktion zugeordnet ist und der eine Bezeichnung dieser Aktion zeigt.

Falls der Benutzer innerhalb der Auswahl-Zeitspanne keine Aktion ausgewählt hat, wird auf dem weiteren Bildschirm 36 bevorzugt wieder die Standard-Darstellung angezeigt. In einer Ausführungsform kann der Benutzer durch eine bestimmte Benutzereingabe bewirken, dass die Auswahl-Zeitspanne erneut beginnt und auf dem weiteren Bildschirm 36 die am ausgewählten Bestandteil 50 auswählbaren Aktionen erneut angezeigt werden. In einer anderen Ausführungsform erlischt nach Ablauf der Auswahl-Zeitspanne auch die Auswahl des Bestandteils 50, und der Benutzer erhält erneut Gelegenheit, ein Objekt 42 in der Darstellung 40 und damit einen Bestandteil 50 des dargestellten Systems auszuwählen.

In einer Ausgestaltung kann der Benutzer einen Bereich 38 des weiteren Bildschirms 36 auch mit Hilfe des Auswahlgeräts 28 auswählen. Beispielsweise mit Hilfe der Tasten wählt der Benutzer aus, ob er mit dem Auswahlgerät 28 ein Objekt 42 in der Darstellung 40 oder einen Bereich 38 des Bildschirms 36 auswählen möchte. Hat der Benutzer die zweite Alternative ausgewählt, so positioniert er das bewegliche Element (Cursor) in demjenigen Bereich 38, der die Bezeichnung der gewünschten Aktion zeigt, und betätigt beispielsweise eine Taste.

Diesem ausgewählten Bereich 38 ist aktuell beispielsweise die Aktion "Ventil öffnen" am zuvor ausgewählten Ventil 50 zugeordnet. Nachdem der Benutzer diesen Bereich 38 ausgewählt hat, erfasst die Rechnereinheit 14 diese Auswahl und damit die Auswahl einer angebotenen Aktion. In einer Ausführungsform wird der ausgewählte Bereich 38 in der Aktionen-Darstellung 30 hervorgehoben dargestellt, beispielsweise in einer anderen Farbe. Bevorzugt ist einem anderen Bereich 38 des weiteren Bildschirms 36 die Aktion "Abbrechen" zugeordnet. Der Benutzer kann also durch Berührung dieses Bereichs die zuvor veranlasste Aktion wieder abbrechen. In einer Ausgestaltung wird der Benutzer aufgefordert, die Auswahl einer Aktion ausdrücklich zu bestätigen, beispielsweise durch Drücken einer Taste oder Berührung eines bestimmten berührungssensitiven Bereichs 38. Die Auswahl der Aktion bleibt nur dann gültig, wenn der Benutzer sie ausdrücklich innerhalb einer vorgegebenen Zeitspanne bestätigt hat.

Die Rechnereinheit 14 löst den Schritt aus, dass die ausgewählte und in einer Ausgestaltung auch bestätigte Aktion an dem zuvor ausgewählten Bestandteil 50 durchgeführt wird, also beispielsweise, dass das ausgewählte Ventil 50 geöffnet wird. Beispielsweise übermittelt die Rechnereinheit 14 einen entsprechenden Steuerbefehl an ein zentrales Steuergerät (nicht gezeigt) des U-Boots oder direkt an den ausgewählten Bestandteil 50.

In dem gerade genannten Beispiel erfordert die Durchführung der ausgewählten Aktion (Ventil öffnen) keine weitere Eingabe des Benutzers. Eine andere auswählbare Aktion kann aber eine weitere Aktion des Benutzers erfordern. Beispielsweise kann dem Benutzer zur Sicherheit eine Nachfrage gestellt werden, ob diese Aktion wirklich ausgeführt werden soll, um auf diese Weise eine unerwünschte Folge einer versehentlichen Eingabe zu verhindern.

Möglich ist auch, dass die Rechnereinheit 14 mehr durchführbare Aktionen für den Bestandteil 50, der durch das ausgewählte Objekt 42 repräsentiert wird, ermittelt hat, als der Bildschirm 36 berührungssensitive Bereiche 38 aufweist. In einer Ausgestaltung werden die durchführbaren Aktionen auf mindestens zwei Darstellungen verteilt. Dem Benutzer wird auf dem Bildschirm 36 die erste Darstellung mit einem Teil der auswählbaren Aktionen gezeigt. Einem auswählbaren Bereich 38 ist die Aktion "Darstellung wechseln" zugeordnet. Falls der Benutzer diesen Bereich gewählt hat, wird die zweite Darstellung mit den übrigen auswählbaren Aktionen auf dem Bildschirm 36 angezeigt. Auswählbare Aktionen können auch auf mehr als zwei Bildschirme verteilt sein. Möglich ist auch, dass der weitere Bildschirm 36 als ein sogenannter "Wisch-Bildschirm" ausgestaltet ist, wie er von Smartphones her bekannt ist, und der Benutzer durch ein "Wischen" zwischen verschiedenen Darstellungen für jeweils eine Teilmenge der auswählbaren Aktionen wechseln kann.

Möglich ist auch, dass die auswählbaren Aktionen in mindestens zwei Teilmengen unterteilt sind und eine hierarchische Auswahl durchgeführt wird. In einem ersten Schritt ordnet die Rechnereinheit 14 allen oder wenigstens einigen berührungssensitiven Bereichen 38 des Bildschirms 36 jeweils eine Teilmenge mit Aktionen zu. Auf jedem Bereich 38 wird eine Bezeichnung der zugeordneten Teilmenge angezeigt. Nachdem der Benutzer einen Bereich 38 berührt und damit eine Teilmenge ausgewählt hat, ordnet die Rechnereinheit 14 jedem berührungssensitiven Bereich 38 jeweils eine Aktion der zuvor ausgewählten Teilmenge zu. Diese Ausgestaltung ermöglicht es dem Benutzer also, eine Aktion in zwei Schritten auszuwählen - zunächst eine Teilmenge und dann eine Aktion dieser Teilmenge. Diese hierarchische Auswahl führt auch dann rasch zum Ziel, wenn die Rechnereinheit 14 eine große Anzahl von auswählbaren Aktionen für den ausgewählten Bestandteil 50 ermittelt hat. Bei N berührungssensitiven Bereichen 38 für Aktionen am Bestandteil 50 lässt sich hierarchisch eine Auswahl zwischen N Teilmengen mit je N Aktionen, insgesamt also N * N verschiedenen Aktionen an diesem Bestandteil 50 treffen.

In einem weiteren Beispiel hat der Benutzer in der Darstellung 40 ein Objekt 42 ausgewählt, welches ein Überdruckventil 50 repräsentiert. Die Rechnereinheit 14 hat anschließend die Aktion "Grenzwert für Überdruckventil festlegen" als auswählbare Aktion ermittelt und einem berührungssensitiven Bereich 38 der Aktionen-Darstellung 30 zugeordnet. Sobald der Benutzer diese Aktion ausgewählt und in einer Ausgestaltung auch bestätigt hat, veranlasst die Rechnereinheit 14 die Anzeige- und Bedieneinheit 18, auf dem Bildschirm 36 eine weitere kontextabhängige Darstellung darzustellen, nämlich eine Tastatur mit einem Ziffernfeld und bevorzugt mit weiteren Zeichen, z.B. Komma, Punkt oder Vorzeichen. In einer Ausgestaltung ist jedem berührungssensitiven Bereich 38 genau ein Zeichen zugeordnet. Einem bestimmten Bereich 38 ist die Handlung zugeordnet, dass die Eingabe der Zeichenfolge abgeschlossen ist (Eingabe beenden, "return"). Der Benutzer gibt mit dieser Tastatur auf dem Bildschirm 36 einen Zahlwert ein, der als Grenzwert für das Überdruckventil verwendet werden soll. Der Benutzer gibt eine Ziffer oder ein sonstiges Zeichen dadurch ein, dass der Benutzer einen Bereich 38 berührt, in dem dieses Zeichen gezeigt wird. Die Rechnereinheit 14 erfasst die eingegebene Zeichenfolge und prüft automatisch, ob die Zeichenfolge einen Zahlwert festlegt und ob der auf diese Weise eingegebene Zahlwert innerhalb eines vorgegebenen Bereichs liegt oder ob beispielsweise ein Eingabefehler vorliegt oder der eingegebene Wert aktuell unzulässig ist.

Weitere Ausgestaltungen sind möglich, wie ein Benutzer mit Hilfe des berührungssensitiven Bildschirms 36 einen Zahlwert eingeben kann. Beispielsweise betätigt der Benutzer einen Schieberegler. Jeder möglichen Position des Schiebereglers ist jeweils ein Zahlwert zugeordnet. Die Anzeige- und Bedieneinheit 18 stellt diesen Schieberegler auf dem berührungssensitiven Bildschirm 36 dar. Oder die Anzeige- und Bedieneinheit 18 stellt auf dem Bildschirm 36 einen Standard-Zahlwert dar sowie zwei Symbole für die beiden verschiedenen Handlungen, den dargestellten Zahlwert zu vergrößern oder zu verkleinern (z.B. "+" und "-") und ein Symbol für die Handlung, die Eingabe abzuschließen. Als Reaktion auf entsprechende Benutzereingaben wird auf dem Bildschirm 36 der aktuell eingestellte Zahlwert angezeigt.

In einer anderen Situation kann der Benutzer mit der Tastatur auf dem Bildschirm 36 auch eine textliche Nachricht eingeben, die dann beispielsweise von einer Sendeantenne des U-Boots an ein anderes Fahrzeug übermittelt wird.

In der gerade beschrieben Ausführungsform hat der Benutzer das Objekt 42 in der Darstellung 40 mit Hilfe des Auswahlgeräts 28 ausgewählt. Möglich ist auch eine Ausführungsform, bei der auf dem Bildschirm 36 eine Tastatur mindestens so lange angezeigt wird, wie der Benutzer noch kein Objekt 42 in der Darstellung 40 ausgewählt hat. Der Benutzer kann ein Objekt 42 wahlweise so wie oben beschrieben mit dem Auswahlgerät 28 oder aber mit der Software-Tastatur auf dem berührungssensitiven Bildschirm 36 auswählen. Der Benutzer wählt ein Objekt 42 dadurch mit Hilfe der auf dem Bildschirm 36 dargestellten Tastatur aus, dass er eine Bezeichnung des Objekts 42 eingibt. Die Auflistung 48 links in der Darstellung 40 enthält jeweils eine eindeutige Bezeichnung für jeden Bestandteil des dargestellten Systems. Diese Ausführungsform mit zwei alternativen Auswahlmöglichkeiten für einen Bestandteil, nämlich mit dem Auswahlgerät 28 und dem berührungssensitiven Bildschirm 36, bietet eine Redundanz für den Fall, dass das Auswahlgerät 28 nicht korrekt funktioniert oder beispielsweise wegen starken Seegangs nicht sicher benutzt werden kann.

**Bezugszeichen**

| | |
|---|---|
| 2 | Bedien-Konsole, trägt die Rechnereinheit 14, die Anzeige- und Bedieneinheit 18, den Darstellungs-Bildschirm 26 und den berührungssensitiven Bildschirm 36 |
| 4 | dem Benutzer zugewandte Vorderseite der Bedien-Konsole 2 |
| 6 | Standfüße der Bedien-Konsole 2 |
| 8 | Bodenplatte der Bedien-Konsole 2 |
| 10 | vorstehendes Bord zwischen den beiden Einschüben 12 und 16, trägt den berührungssensitiven Bildschirm 36 und das Auswahlgerät 28 |
| 12 | Einschub unter dem Bord 10, trägt die Rechnereinheit 14 |
| 14 | Rechnereinheit im Einschub 12, steuert die Anzeige- und Bedieneinheit 18 an, verarbeitet von der Anzeige- und Bedieneinheit 18 erfassten Benutzereingaben |
| 16 | mittlerer Einschub, trägt die Anzeige- und Bedieneinheit 18 |
| 18 | Anzeige- und Bedieneinheit im Einschub 16, umfasst den Bildschirm 26 für die Darstellung 40, den berührungssensitiven Bildschirm 36 für die Aktionen-Darstellung 30 und das Eingabegerät 28, erfasst Benutzereingaben |
| 20 | Rückseite der Bedien-Konsole 2 |
| 22 | Verkleidungsblech der Bedien-Konsole 2 |
| 24 | oberer Einschub, trägt die Instrumententafel 34 |
| 26 | Bildschirm, zeigt die Darstellung 40, fungiert als Darstellungs-Bildschirm |
| 28 | Auswahlgerät mit Track Ball 46 und drei Tasten, im Bord 10 montiert |
| 30 | Darstellung der Aktionen, die für das ausgewählte Objekt 42 möglich sind, ist auf dem Bildschirm 36 in den berührungssensitiven Bereichen 38 dargestellt |
| 32 | Tür vor der Rechnereinheit 14 |
| 34 | Instrumententafel für Meldeleuchten im Einschub 24 |
| 36 | berührungssensitiver Bildschirm auf dem Bord 10, ist in Bereiche 38 unterteilt |
| 38 | berührungssensitiver Bereich des berührungssensitiven Bildschirms 36, zeigt eine Bezeichnung einer auswählbaren Aktion |
| 40 | Darstellung des zu überwachenden Systems, auf dem Darstellungs-Bildschirm 26 dargestellt |
| 42 | in der Darstellung 40 ausgewähltes graphisches Objekt, repräsentiert einen Bestandteil 50 des zu überwachenden Systems |
| 44 | Bezeichnung des Bestandteils 50, das durch das ausgewählte Objekt 42 |
| | repräsentiert wird, in der Auflistung 48 |
| 46 | Track Ball des Auswahlgeräts 28 |
| 48 | Auflistung der Bezeichnungen der Bestandteile des in der Darstellung 40 gezeigten Systems |
| 50 | Bestandteil des Systems, durch das graphisches Objekt 42 repräsentiert |

## Patentansprüche

1. Anordnung umfassend ein Wasserfahrzeug und ein System,
wobei das Wasserfahrzeug
- eine Anzeige- und Bedieneinheit (18) und
- eine Rechnereinheit (14)
umfasst,
wobei das System mehrere durch jeweils mindestens eine Aktion veränderbare Bestandteile (50) umfasst,
wobei die Anzeige- und Bedieneinheit (18)
- einen Darstellungs-Bildschirm (26) und
- ein Auswahlgerät (28)
umfasst,
wobei die Rechnereinheit (14) dazu ausgestaltet ist, die Anzeige- und Bedieneinheit (18) so anzusteuern,
dass die angesteuerte Anzeige- und Bedieneinheit (18) auf dem Darstellungs-Bildschirm (26) eine Darstellung (40) des Systems dergestalt anzeigt,
dass die angezeigte Darstellung (40) mindestens einen veränderbaren Bestandteil (50) des Systems zeigt,
wobei das Auswahlgerät (28) dazu ausgestaltet ist, einem Benutzer die Auswahl eines in der Darstellung (40) gezeigten veränderbaren Bestandteils (50) zu ermöglichen, und wobei die Anzeige- und Bedieneinheit (18) dazu ausgestaltet ist, eine Auswahl eines in der Darstellung (40) gezeigten Bestandteils (50) sowie eine Auswahl einer Aktion an dem ausgewählten Bestandteil (50) durch einen Benutzer zu erfassen,
wobei
die Anzeige- und Bedieneinheit (18) einen weiteren Bildschirm (36) umfasst, der räumlich vom Darstellungs-Bildschirm (26) getrennt ist,
wobei der weitere Bildschirm (36) mehrere berührungssensitive Bereiche (38) umfasst,
**dadurch gekennzeichnet, dass**
die Rechnereinheit (14) dazu ausgestaltet ist,
- nach Auswahl eines Bestandteils (50) automatisch diejenigen Aktionen, die an dem ausgewählten Bestandteil (50) durchführbar sind, zu ermitteln und
- mindestens eine ermittelte Aktion einem berührungssensitiven Bereich (38) des weiteren Bildschirms (36) zuzuordnen,
wobei die Rechnereinheit (14) weiterhin dazu ausgestaltet ist, die Anzeige- und Bedieneinheit (18) so anzusteuern,
dass jeder berührungssensitive Bereich (38), dem eine ermittelte Aktion zugeordnet ist, eine Bezeichnung dieser zugeordneten Aktion zeigt,
wobei die Anzeige- und Bedieneinheit (18) weiterhin dazu ausgestaltet ist,
eine Auswahl eines berührungssensitiven Bereichs (38), der eine Bezeichnung einer zugeordneten Aktion zeigt, durch einen Benutzer zu erfassen, und
wobei die Rechnereinheit (14) weiterhin dazu ausgestaltet ist, die Durchführung der dem ausgewählten Bereich (38) zugeordneten Aktion an dem ausgewählten Bestandteil (50) auszulösen.

2. Anordnung nach Anspruch 1,
wobei das Auswahlgerät (28) räumlich getrennt vom Darstellungs-Bildschirm (26) und räumlich getrennt vom weiteren Bildschirm (36) angeordnet ist.

3. Anordnung nach einem der vorstehenden Ansprüche,
wobei das Auswahlgerät (28) und der weitere Bildschirm (36) unterhalb des Darstellungs-Bildschirms (26) angeordnet sind.

4. Anordnung nach einem der vorstehenden Ansprüche,
wobei
die Rechnereinheit (14) dazu ausgestaltet ist,
nach Auswahl eines Bestandteils (50) und nach Auswahl einer Aktion, die von einem Parameter abhängt,
die Anzeige- und Bedieneinheit (18) so anzusteuern,
dass die Eingabe eines Wertes für diesen Parameter auf dem weiteren Bildschirm (36) ermöglicht wird,
die Anzeige- und Bedieneinheit (18) dazu ausgestaltet ist, den eingegebenen Parameter-Wert zu erfassen, und
die Rechnereinheit (14) weiterhin dazu ausgestaltet ist,
die Durchführung der zugeordneten Aktion dergestalt auszulösen, dass die Aktion von dem erfassten Parameter-Wert abhängt.

5. Anordnung nach Anspruch 4,
wobei
die Rechnereinheit (14) dazu ausgestaltet ist, die Anzeige- und Bedieneinheit (18) so anzusteuern,
dass die Eingabe eines Parameter-Wertes ermöglicht wird,
indem eine Abfolge von auf dem weiteren Bildschirm (36) angezeigten Zeichen durch Auswahl von jeweils einem berührungssensitiven Bereich (38) pro Zeichen eingegeben wird,
die Anzeige- und Bedieneinheit (18) dazu ausgestaltet ist, die eingegebene Abfolge von Zeichen zu erfassen, und
die Rechnereinheit (14) weiterhin dazu ausgestaltet ist, die erfasste Zeichen-Abfolge als Parameter-Wert für die Aktion zu verwenden.

6. Anordnung nach einem der vorstehenden Ansprüche,
wobei
die Rechnereinheit (14) dazu ausgestaltet ist, die Anzeige- und Bedieneinheit (18) so anzusteuern,
dass die auf dem Darstellungs-Bildschirm (26) angezeigte Darstellung (40) eine Auflistung (48) mit Bezeichnungen der dargestellten Bestandteile (50) des Systems enthält, und
die Rechnereinheit (14) dazu ausgestaltet ist,
die Anzeige- und Bedieneinheit (18) so anzusteuern,
dass die Eingabe einer Abfolge von auf dem weiteren Bildschirm (36) dargestellten Zeichen durch Auswahl von jeweils einem berührungssensitiven Bereich (38) pro Zeichen ermöglicht wird,
wobei die Anzeige- und Bedieneinheit (18) dazu ausgestaltet ist, die eingegebene Abfolge von Zeichen zu erfassen, und
wobei die Rechnereinheit (14) dazu ausgestaltet ist, dann, wenn die erfasste Zeichen-Abfolge der Bezeichnung eines in der Auflistung (48) genannten Bestandteils (50) entspricht,
die erfasste Zeichenfolge als Auswahl dieses Bestandteils (50) zu verwenden.

7. Anordnung nach einem der vorstehenden Ansprüche,
wobei
die Rechnereinheit (14) dazu ausgestaltet ist, bei der Ermittlung derjenigen Aktionen, die an dem ausgewählten Bestandteil (50) durchführbar sind,
mindestens eine Betriebsbedingung und / oder mindestens eine Umgebungsbedingung des Wasserfahrzeugs und / oder des Systems automatisch zu berücksichtigen.

8. Anordnung nach Anspruch 7,
wobei
die Rechnereinheit (14) dazu ausgestaltet ist,
abhängig von der berücksichtigten Betriebsbedingung und / oder Umgebungsbedingung automatisch diejenigen durchführbaren Aktionen zu ermitteln oder ermittelten Aktionen auszuwählen, die bei der oder jeder berücksichtigten Bedingung zulässig sind, und nur jede zulässige Aktion einem berührungssensitiven Bereich (38) dergestalt zuzuordnen, dass diese Aktion auswählbar ist.

9. Anordnung nach einem der vorstehenden Ansprüche,
wobei
das Wasserfahrzeug ein Gehäuse (2) umfasst, wobei
- der weitere Bildschirm (36),
- der Darstellungs-Bildschirm (26) und
- das Auswahlgerät (28) in das Gehäuse (2) eingebaut sind.

10. Anordnung nach Anspruch 9,
wobei
der weitere Bildschirm (36) und der Darstellungs-Bildschirm (26) so in das Gehäuse (2) eingebaut sind,
dass sie beide von derselben Benutzungsseite (4) her sichtbar sind, und
das Gehäuse (2) einen zur Benutzungsseite (4) hin vorspringenden Bestandteil (10) aufweist,
wobei der weitere Bildschirm (36) und das Auswahlgerät (28) in den vorspringenden Bestandteil (10) eingebaut sind.

11. Anordnung nach Anspruch 9 oder Anspruch 10,
wobei in das Gehäuse (2) weiterhin eine Instrumententafel (34) mit Meldeleuchten eingebaut ist, wobei die Rechnereinheit (14) weiterhin dazu ausgestaltet ist,
nach Auswahl einer Aktion die Instrumententafel (34) so anzusteuern, dass mindestens eine Meldeleuchte ihren Zustand ändert.

12. Anordnung nach einem der Ansprüche 9 bis 11,
wobei
auch die Rechnereinheit (14) in das Gehäuse (2) eingebaut ist.

13. Anordnung nach einem der vorstehenden Ansprüche,
wobei
die Rechnereinheit (14) weiterhin dazu ausgestaltet ist, die Anzeige- und Bedieneinheit (18) so anzusteuern, dass
nach Auswahl eines Bestandteils (50) durch einen Benutzer
jeder berührungssensitive Bereich (38), dem eine ermittelte Aktion zugeordnet ist, maximal für eine vorgegebene Auswahl-Zeitspanne eine Bezeichnung dieser zugeordneten Aktion zeigt, und
die Anzeige- und Bedieneinheit (18) die Anzeige der Aktions-Bezeichnungen beendet, wenn eine Auswahl eines berührungssensitiven Bereichs (38) durch einen Benutzer erfasst ist oder die Auswahl-Zeitspanne abgelaufen ist.

14. Verfahren zum Steuern eines Systems mittels eines Wasserfahrzeugs,
wobei das Wasserfahrzeug
- eine Anzeige- und Bedieneinheit (18) und
- eine Rechnereinheit (14)
umfasst,
wobei das System mehrere veränderbare Bestandteile (50) umfasst,
wobei die Anzeige- und Bedieneinheit (18)
- einen Darstellungs-Bildschirm (26) und
- ein Auswahlgerät (28)
umfasst und
wobei das Verfahren die Schritte umfasst, dass
- die Rechnereinheit (14) die Anzeige- und Bedieneinheit (18) ansteuert,
- die angesteuerte Anzeige- und Bedieneinheit (18) auf dem Darstellungs-Bildschirm (26) eine Darstellung (40) des Systems anzeigt,
- wobei die angezeigte Darstellung (40) mindestens einen veränderbaren Bestandteil (50) des Systems zeigt,
- das Auswahlgerät (28) einem Benutzer die Auswahl eines in der Darstellung (40) gezeigten veränderbaren Bestandteils (50) ermöglicht und
- die Anzeige- und Bedieneinheit (18) eine Auswahl eines in der Darstellung (40) gezeigten Bestandteils (50) sowie eine Auswahl einer Aktion an dem zuvor ausgewählten Bestandteil (50) durch einen Benutzer erfasst,
wobei
die Anzeige- und Bedieneinheit (18) einen weiteren Bildschirm (36) umfasst, der räumlich vom Darstellungs-Bildschirm (26) getrennt ist,
wobei der weitere Bildschirm (36) mehrere berührungssensitive Bereiche (38) umfasst und
**dadurch gekennzeichnet, dass**
das Verfahren die weiteren Schritte umfasst, dass
- die Rechnereinheit (14) nach Auswahl eines Bestandteils (50) automatisch diejenigen Aktionen, die an dem ausgewählten Bestandteil (50) durchführbar sind, ermittelt,
- die Rechnereinheit (14) mindestens eine ermittelte Aktion einem berührungssensitiven Bereich (38) des weiteren Bildschirms (36) zuordnet,
- die Rechnereinheit (14) erneut die Anzeige- und Bedieneinheit (18) ansteuert,
- die erneut angesteuerte Anzeige- und Bedieneinheit (18) bewirkt, dass jeder berührungssensitive Bereich (38), dem eine ermittelte Aktion zugeordnet ist, eine Bezeichnung dieser zugeordneten Aktion zeigt,
- die Anzeige- und Bedieneinheit (18) eine Auswahl eines berührungssensitiven Bereichs (38), der eine Bezeichnung einer zugeordneten Aktion zeigt, durch einen Benutzer erfasst und
- die Rechnereinheit (14) die Durchführung der dem ausgewählten Bereich (38) zugeordneten Aktion an dem ausgewählten Bestandteil (50) auslöst.

## Claims

1. Arrangement comprising a watercraft and a system, wherein the watercraft comprises
- a display and operating unit (18) and
- a computer unit (14),
wherein the system comprises a plurality of components (50), each of which is alterable by means of at least one action,
wherein the display and operating unit (18) comprises
- a representation screen (26), and
- a selection device (28),
wherein the computer unit (14) is configured to control the display and operating unit (18) so that the controlled display and operating unit (18) displays a representation (40) of the system on the representation screen (26) in such a way that the displayed representation (40) shows at least one alterable component (50) of the system, wherein the selection device (28) is configured to enable a user to select an alterable component (50) shown in the representation (40), and
wherein the display and operating unit (18) is configured to detect a selection of a component (50) shown in the representation (40) and also a selection of an action on the selected component (50) by a user,
wherein the display and operating unit (18) comprises a further screen (36), which is spatially separate from the representation screen (26), wherein the further screen (36) comprises a plurality of touch-sensitive regions (38), **characterized in that** the computer unit (14) is configured
- after selection of a component (50) to automatically determine those actions which are able to be executed on the selected component (50), and
- to assign at least one determined action to a touch-sensitive region (38) of the further screen (36),
wherein the computer unit (14) is furthermore configured to control the display and operating unit (18) so
that each touch-sensitive region (38) to which a determined action is assigned shows a designation of this assigned action,
wherein the display and operating unit (18) is furthermore configured
to detect a selection of a touch-sensitive region (38) showing a designation of an assigned action by a user, and
wherein the computer unit (14) is furthermore configured to trigger the execution of the action assigned to the selected region (38) on the selected component (50).

2. Arrangement according to Claim 1,
wherein
the selection device (28) is arranged in a manner spatially separate from the representation screen (26) and spatially separate from the further screen (36) .

3. Arrangement according to either of the preceding claims,
wherein
the selection device (28) and the further screen (36) are arranged below the representation screen (26) .

4. Arrangement according to any of the preceding claims,
wherein
the computer unit (14) is configured after selection of a component (50) and after selection of an action dependant on a parameter to control the display and operating unit (18) so that the input of a value for this parameter on the further screen (36) is made possible,
the display and operating unit (18) is configured to detect the parameter value that is input, and the computer unit (14) is furthermore configured to trigger the execution of the assigned action in such a way that the action is dependant on the detected parameter value.

5. Arrangement according to Claim 4,
wherein
the computer unit (14) is configured to control the display and operating unit (18) so
that the input of a parameter value is made possible by a sequence of characters displayed on the further screen (36) being input by selection of in each case one touch-sensitive region (38) per character,
the display and operating unit (18) is configured to detect the sequence of characters that is input, and
the computer unit (14) is furthermore configured to use the detected character sequence as a parameter value for the action.

6. Arrangement according to any of the preceding claims,
wherein
the computer unit (14) is configured to control the display and operating unit (18) so
that the representation (40) displayed on the representation screen (26) contains a listing (48) having designations of the represented components (50) of the system, and
the computer unit (14) is configured to control the display and operating unit (18) so that the input of a sequence of characters represented on the further screen (36) is made possible by selection of in each case one touch-sensitive region (38) per character,
wherein the display and operating unit (18) is configured to detect the sequence of characters that is input, and
wherein the computer unit (14) is configured, in the event of the detected character sequence corresponding to the designation of a component (50) mentioned in the listing (48),
to use the detected character sequence as selection of this component (50).

7. Arrangement according to any of the preceding claims,
wherein
the computer unit (14) is configured, when determining those actions which are able to be executed on the selected component (50),
to automatically take account of at least one operational condition and/or at least one environmental condition of the watercraft and/or of the system.

8. Arrangement according to Claim 7,
wherein
the computer unit (14) is configured depending on the operational condition and/or environmental condition taken into account automatically to determine those executable actions or to select those determined actions which are permissible given the or each condition taken into account, and
to assign only each permissible action to a touch-sensitive region (38) in such a way that this action is selectable.

9. Arrangement according to any of the preceding claims,
wherein
the watercraft comprises a housing (2),
wherein
- the further screen (36),
- the representation screen (26) and
- the selection device (28)
are incorporated in the housing (2).

10. Arrangement according to Claim 9, wherein
the further screen (36) and the representation screen (26) are incorporated in the housing (2) so that they are both visible from the same use side (4), and
the housing (2) has a component (10) projecting towards the use side (4),
wherein the further screen (36) and the selection device (28) are incorporated in the projecting component (10).

11. Arrangement according to Claim 9 or Claim 10,
wherein
an instrument panel (34) having signalling luminaires is incorporated in the housing (2), wherein the computer unit (14) is furthermore configured
after selection of an action to control the instrument panel (34) so that at least one signalling luminaire changes its state.

12. Arrangement according to any of Claims 9 to 11,
wherein
the computer unit (14), too, is incorporated in the housing (2).

13. Arrangement according to any of the preceding claims,
wherein
the computer unit (14) is furthermore configured to control the display and operating unit (18) so that after selection of a component (50) by a user each touch-sensitive region (38) to which a determined action is assigned shows a designation of this assigned action maximally for a predefined selection time period, and
the display and operating unit (18) ends the display of the action designations if a selection of a touch-sensitive region (38) by a user is detected or the selection time period has elapsed.

14. Method for controlling a system by means of a watercraft,
wherein the watercraft comprises
- a display and operating unit (18) and
- a computer unit (14),
wherein the system comprises a plurality of alterable components (50),
wherein the display and operating unit (18) comprises
- a representation screen (26) and
- a selection device (28),
and
the method comprises the steps that
- the computer unit (14) controls the display and operating unit (18),
- the controlled display and operating unit (18) displays a representation (40) of the system on the representation screen (26),
- wherein the displayed representation (40) shows at least one alterable component (50) of the system,
- the selection device (28) enables a user to select an alterable component (50) shown in the representation (40), and
- the display and operating unit (18) detects a selection of a component (50) shown in the representation (40) and also a selection of an action on the previously selected component (50) by a user,
wherein the display and operating unit (18) comprises a further screen (36), which is spatially separate from the representation screen (26), wherein the further screen (36) comprises a plurality of touch-sensitive regions (38), and **characterized in that** the method comprises the further steps that
- the computer unit (14) after selection of a component (50) automatically determines those actions which are able to be executed on the selected component (50),
the computer unit (14) assigns at least one determined action to a touch-sensitive region (38) of the further screen (36),
- the computer unit (14) controls the display and operating unit (18) again,
- the display and operating unit (18) having been controlled again has the effect that each touch-sensitive region (38) to which a determined action is assigned shows a designation of this assigned action,
- the display and operating unit (18) detects a selection of a touch-sensitive region (38) showing a designation of an assigned action by a user, and
- the computer unit (14) triggers the execution of the action assigned to the selected region (38) on the selected component (50).

## Revendications

1. Ensemble comprenant un engin nautique et un système, l'engin nautique comprenant
- une unité d'affichage et de commande (18) et
- une unité informatique (14),
le système comprenant une pluralité de composants (50) qui peuvent être chacun modifiés par au moins une action, l'unité d'affichage et de commande (18) comprenant
- un écran de présentation (26) et
- un sélecteur (28),
l'unité informatique (14) étant conçue pour commander l'unité d'affichage et de commande (18) de sorte que l'unité d'affichage et de commande (18) commandée affiche une présentation (40) du système sur l'écran de présentation (26) de manière à ce que la présentation affichée (40) indique au moins un composant modifiable (50) du système,
le sélecteur (28) étant conçu pour permettre à un utilisateur de sélectionner un composant modifiable (50) présenté dans la présentation (40), et
l'unité d'affichage et de commande (18) étant conçue pour détecter qu'un utilisateur a effectué une sélection d'un composant (50) indiqué dans la présentation (40) et une sélection d'une action sur le composant sélectionné (50), l'unité d'affichage et de commande (18) comprenant un autre écran (36) qui est spatialement séparé de l'écran de présentation (26),
l'autre écran (36) comprenant une pluralité de zones tactiles (38),
**caractérisé en ce que**
l'unité informatique (14) est conçue pour
- après sélection d'un composant (50), déterminer automatiquement les actions qui peuvent être effectuées sur le composant sélectionné (50), et
- associer au moins une action déterminée à une zone tactile (38) de l'autre écran (36),
l'unité informatique (14) étant en outre conçue pour commander l'unité d'affichage et de commande (18) de sorte que chaque zone tactile (38), à laquelle est associée une action déterminée, indique une désignation de cette action associée,
l'unité d'affichage et de commande (18) étant en outre conçue pour détecter qu'un utilisateur a effectué une sélection d'une zone tactile (38), qui indique une désignation d'une action associée, et
l'unité informatique (14) étant en outre conçue pour déclencher l'exécution de l'action, associée à la zone sélectionnée (38), sur le composant (50) sélectionné.

2. Ensemble selon la revendication 1,
le sélecteur (28) étant disposé de manière à être spatialement séparé de l'écran de présentation (26) et spatialement séparé de l'autre écran (36).

3. Ensemble selon l'une des revendications précédentes,
le sélecteur (28) et l'autre écran (36) étant disposés sous l'écran de présentation (26).

4. Ensemble selon l'une des revendications précédentes,
l'unité informatique (14) étant conçue pour, après sélection d'un composant (50) et après sélection d'une action dépendant d'un paramètre, commander l'unité d'affichage et de commande (18) de façon à permettre l'entrée d'une valeur de ce paramètre sur l'autre écran (36),
l'unité d'affichage et de commande (18) étant conçue pour détecter la valeur de paramètre entrée, et
l'unité informatique (14) étant en outre conçue pour déclencher l'exécution de l'action associée de sorte que l'action dépende de la valeur de paramètre détectée.

5. Ensemble selon la revendication 4,
l'unité informatique (14) étant conçue pour commander l'unité d'affichage et de commande (18) de façon à permettre l'entrée d'une valeur de paramètre en ce qu'une séquence de caractères affichés sur l'autre écran (36) est entrée par sélection d'une zone tactile (38) pour chaque caractère,
l'unité d'affichage et de commande (18) étant conçue pour détecter la séquence de caractères entrée, et
l'unité informatique (14) étant en outre conçue pour utiliser la séquence de caractères détectée comme valeur de paramètre de l'action.

6. Ensemble selon l'une des revendications précédentes,
l'unité informatique (14) étant conçue pour commander l'unité d'affichage et de commande (18) de sorte que la présentation (40) affichée sur l'écran de présentation (26) contienne une liste (48) comprenant des désignations des composants présentés (50) du système, et
l'unité informatique (14) étant conçue pour commander l'unité d'affichage et de commande (18) de façon à permettre l'entrée d'une séquence de caractères affichés sur l'autre écran (36) par sélection d'une zone tactile (38) pour chaque caractère,
l'unité d'affichage et de commande (18) étant conçue pour détecter la séquence de caractères entrée, et
l'unité informatique (14) étant conçue pour utiliser la chaîne de caractères détectée comme sélection de ce composant (50) seulement si la séquence de caractères détectée correspond à la désignation d'un composant (50) mentionné dans la liste (48).

7. Ensemble selon l'une des revendications précédentes,
l'unité informatique (14) étant conçue pour, lors de la détermination des actions qui sont réalisables sur le composant sélectionné (50), prendre automatiquement en compte au moins une condition de fonctionnement et/ou au moins une condition d'environnement de l'engin nautique et/ou du système.

8. Ensemble selon la revendication 7,
l'unité informatique (14) étant conçue pour, en fonction de la condition de fonctionnement et/ou de la condition d'environnement prises en compte, déterminer automatiquement les actions réalisables ou sélectionner automatiquement les actions déterminées qui sont admissibles lors de la ou de chaque condition prise en compte, et n'associer chaque action admissible qu'à une zone tactile (38) de manière à pouvoir sélectionner cette action.

9. Ensemble selon l'une des revendications précédentes,
l'engin nautique comprenant un boîtier (2),
- l'autre écran (36),
- l'écran de présentation (26) et
- le sélecteur (28)
étant installés dans le boîtier (2).

10. Ensemble selon la revendication 9,
l'autre écran (36) et l'écran de présentation (26) étant installés dans le boîtier (2),
les deux étant visibles du même côté utilisateur (4), et le boîtier (2) comportant un composant (10) qui fait saillie du côté utilisateur (4)
l'autre écran (36) et le sélecteur (28) étant installés dans le composant (10) qui fait saillie.

11. Ensemble selon la revendication 9 ou la revendication 10,
un tableau de bord (34) pourvu de voyants lumineux étant également installé dans le boîtier (2),
l'unité informatique (14) étant également conçue pour, après sélection d'une action, commander le tableau de bord (34) de manière à modifier l'état d'au moins un voyant lumineux.

12. Ensemble selon l'une des revendications 9 à 11, l'unité informatique (14) étant également installée dans le boîtier (2).

13. Ensemble selon l'une des revendications précédentes,
l'unité informatique (14) étant également conçue pour commander l'unité d'affichage et de commande (18) de sorte que, après sélection d'un composant (50) par un utilisateur, chaque zone tactile (38), à laquelle est associée une action déterminée, indique une désignation de cette action associée au maximum pendant une durée de sélection spécifiée, et
l'unité d'affichage et de commande (18) terminant l'affichage des désignations d'action lorsqu'une sélection d'une zone tactile (38) a été détectée par un utilisateur ou que la durée de sélection a expiré.

14. Procédé de commande d'un système à l'aide d'un engin nautique,
l'engin nautique comprenant
- une unité d'affichage et de commande (18) et
- une unité informatique (14),
le système comprenant une pluralité de composants modifiables (50),
l'unité d'affichage et de commande (18) comprenant
- un écran de présentation (26) et
- un sélecteur (28) et
le procédé comprenant les étapes suivantes dans lesquelles
- l'unité informatique (14) commande l'unité d'affichage et de commande (18),
- l'unité d'affichage et de commande (18) commandée affiche une présentation (40) du système sur l'écran de présentation (26),
- la présentation affichée (40) indiquant au moins un composant modifiable (50) du système,
- le sélecteur (28) permet à un utilisateur de sélectionner un composant modifiable (50) indiqué dans la présentation (40), et
- l'unité d'affichage et de commande (18) détecte qu'un utilisateur a effectué une sélection d'un composant (50) indiqué dans la présentation (40) et une sélection d'une action sur le composant (50) précédemment sélectionné,
l'unité d'affichage et de commande (18) comprenant un autre écran (36) qui est spatialement séparé de l'écran de présentation (26),
l'autre écran (36) comprenant une pluralité de zones tactiles (38) et
**caractérisé en ce que**
le procédé comprend les étapes supplémentaires suivantes dans lesquelles
- l'unité informatique (14) détermine automatiquement, après sélection d'un composant (50), les actions qui sont réalisables sur le composant sélectionné (50),
- l'unité informatique (14) associe au moins une action déterminée à une zone tactile (38) de l'autre écran (36),
- l'unité informatique (14) commande à nouveau l'unité d'affichage et de commande (18),
- l'unité d'affichage et de commande (18) à nouveau commandée a pour effet que chaque zone tactile (38), à laquelle est associée une action déterminée, indique une désignation de cette action associée,
- l'unité d'affichage et de commande (18) détecte qu'un utilisateur a effectué une sélection d'une zone tactile (38) qui indique une désignation d'une action associée et
- l'unité informatique (14) déclenche l'exécution de l'action, associée à la zone sélectionnée (38), sur le composant (50) sélectionné.
